# EUROPÄISCHE PATENTSCHRIFT

(11) **EP 1 637 792 B1**
(45) Veröffentlichungstag und Bekanntmachung des Hinweises auf die Patenterteilung: **19.08.2009**
(21) Anmeldenummer: 05019933.0
(22) Anmeldetag: 13.09.2005
(51) Int. Cl.: B29C 65/06, B29C 65/00, F16L 47/02, B23K 20/12

(54) **Verfahren zum Verbinden von Leitungen**
Method for connecting pipes
Méthode de raccordement de tuyaux

(30) Priorität: 17.09.2004 DE 102004045135
(43) Veröffentlichungstag der Anmeldung: 22.03.2006
(73) Patentinhaber: VERITAS AG, 63571 Gelnhausen (DE)
(72) Erfinder: Hattass, Dirk, 63584 Gründau (DE); Naumann, Volker Dr., 63619 Bad Orb (DE); Kahn, Peter, 63526 Erlensee (DE)
(74) Vertreter: Grünecker, Kinkeldey, Stockmair & Schwanhäusser Anwaltssozietät

(56) Entgegenhaltungen:
- EP-A- 1 604 805
- EP-A2- 1 087 167
- WO-A-98/57092
- DE-A1- 19 902 357
- DE-A1- 19 917 071
- JP-A- 57 125 011
- US-A- 3 678 566
- US-A- 5 858 142
- US-A- 5 941 422
- "SCHWEISSEN VON THERMOPLASTISCHEN KUNSTSTOFFEN IN DER SERIENFERTIGUNG ROTATIONSREIBSCHWEISSEN ANLAGEN, VERFAHREN, MERKMALE" DVS RICHTLINIE, Bd. 2218, Nr. TEIL 1, Februar 1994 (1994-02), XP008046287

## Beschreibung

Die Erfindung bezieht sich auf ein Verfahren zum Verbinden von Leitungen.

Es ist eine Verbindung zwischen einem Verbindungskörper und einem Rohr bzw. Schlauch aus der Druckschrift WO 98/57092 bekannt, wobei das Rohr durch Reibschweißen an dem Verbindungskörper angebracht ist. Der Verbindungskörper enthält dabei zwei verschiedene Außenflächen an die das Rohr angeschweißt ist. Weiterhin sind bei der Verbindung Hohlräume bereitgestellt, damit während des Reibschweißvorgangs entstehendes, überschüssiges Material dahin vordringen kann. Durch den Reibschweißvorgang ergeben sich zwei ringförmige Verbindungszonen, wodurch beide Teile flüssigkeitsdicht miteinander verbunden sind.

Eine Vorrichtung zum Verbinden von Leitungen mit wenigstens einem Anschluss, der zur Verbindung mit einem Leitungsende durch Reibschweißen angepasst ist, ist beispielsweise aus der EP 1087 167 A2 bekannt.

Der Stand der Technik hat den Nachteil, dass beim Verbinden der Vorrichtung mit einer Leitung durch Reibschweißen Abriebspartikel gebildet werden, die in das Leitungsinnere gelangen und die Leitung verschmutzen können. Die Abriebspartikel werden durch den Austritt von beim Reibschweißen gebildeter Schmelze erzeugt, die in das Leitungsinnere als Granulat gelangt.

Insbesondere bei der Verwendung von Kraftstoffleitungen sind derartige Verschmutzungen besonders schädlich.

Der Erfindung liegt die Aufgabe zugrunde, ein Verfahren zum Verbinden von Leitungen anzugeben, durch die eine Verschmutzung von Leitungen beim Verbinden dieser durch Reibschweißen vermieden oder zumindest gesenkt werden kann.

Die erfindungsgemäße Aufgabe wird durch den Anspruch 1 gelöst.

Die Erfindung hat den Vorteil, dass durch das Steuern des Entstehungsbereiches der beim Reibschweißen entstehenden Schmelze die Aufschmelzstelle, d.h. die Schweißstelle, örtlich verlagert werden kann. Dabei kann die Schweißstelle insbesondere an solche Stellen hinverlagert werden, die im Hinblick auf eine Vermeidung von Schmelzeaustritt in das Leitungsinnere günstig sind. Durch eine entsprechende Steuerung des Entstehungsortes der Schmelze wird also die Möglichkeit einer lokalen Veränderung der Schweißstelle geschaffen, die es ermöglicht, die Erzeugung der Schmelze von den im Hinblick auf den unerwünschten Schmelzeaustritt kritischen Stellen an vergleichsweise unbedenkliche Stellen zu verlegen.

Die mit der Erfindung erreichbare Vermeidung oder Senkung der Bildung von Abriebspartikeln beim Reibschweißen bedeutet eine erhebliche Verbesserung der Sicherheit, insbesondere im Bereich der Kraftfahrzeugtechnik, da die für Kraftstoffleitungen beim Reibschweißen hervorgerufenen schädlichen Verschmutzungen nicht mehr oder nur in geringerem Maße auftreten. Außerdem verbessert die Erfindung die Möglichkeit, die Herstellung von Leitungsverbindungen durch Reibschweißen zu automatisieren, da die bisher nach dem Reibschweißen erforderliche Reinigung der Leitungen entfällt.

In einer bevorzugten Ausführungsform des erfindungsgemäßen Verfahrens wird ein Anpressdruck zwischen dem Leitungsende und dem Anschluss im Wesentlichen lokal im Entstehungsbereich der Schmelze erzeugt. Der gezielte Erzeugung des Anpressdrucks erlaubt auf einfache Weise eine örtliche Steuerung des Entstehungsbereichs der Schmelze, so dass die Schweißstelle bzw. der Aufschmelzbereich von den kritischen, den Schmelzeaustritt fördernden Stellen weg zu weniger kritischen Stellen ermöglicht werden kann.

In einer weiteren besonders bevorzugten Ausführungsform des erfindungsgemäßen Verfahrens werden das Leitungsende und der Anschluss in einem ersten Schritt durch eine im Wesentlichen lineare Relativbewegung zusammengefügt, wobei das Leitungsende und der Anschluss bis zu einer vorgegebenen Position oder bis zum Erreichen eines vorgegebenen Widerstands relativ zueinander bewegt werden. In einem zweiten Schritt werden das Leitungsende und der Anschluss durch eine im Wesentlichen rotative Relativbewegung unter Druck verschweißt. Durch die gesteuerte, lineare Bewegung des Leitungsendes und des Anschlusses relativ zueinander kann der Entstehungsort der Schmelze beeinflusst werden. Überdies kann auch die Schmelzemenge gesteuert werden, indem das Leitungsende und der Anschluss bis zu einer vorgegebenen bestimmten Position relativ zueinander bewegt werden. Durch gezielte Einstellung dieser vorgegebenen Position kann präzise gesteuert werden, wie viel Schmelze beim Reibschweißen erzeugt werden soll. Auf diese Weise kann noch besser gewährleistet werden, dass keine Schmelze in das Leitungsinnere austritt, da nur die für eine ausreichend feste Schweißverbindung erforderliche Schweißgutmenge erzeugt wird.

Alternativ ist es möglich, das Leitungsende und den Anschluss bis zum Erreichen eines vorgegebenen Widerstands, insbesondere eines vorgegebenen mechanischen Reibwiderstands, relativ zueinander zu bewegen. Die Einstellung dieses vorgegebenen Widerstands gestattet die Regulierung der Schmelzemenge derart, dass die Bildung einer für eine feste Schweißverbindung erforderlichen Menge ermöglicht wird, ohne einen Überschuss an Schmelze zu erzeugen, der möglicherweise in das Leitungsinnere austritt.

Durch die Mehrstufigkeit des Verfahrens, d.h. die Durchführung einer im Wesentlichen linearen Relativbewegung in einem ersten Schritt gefolgt von einer im Wesentlichen rotativen Relativbewegung in einem zweiten Schritt, wird vermieden, dass das Leitungsende bereits beim Einschieben in den Anschluss aufgeschmolzen wird. Vielmehr wird durch das mehrstufige Verfahren eine gezielte Aufschmelzung des Leitungsendes im hinteren Anschlussbereich gefördert, der einen im Hinblick auf die Vermeidung von Schmelzeaustritt in das Leitungsinnere günstigen Bereich bildet. Überdies bietet die Trennung der Prozessschritte Zusammenfügen und Verschweißen eine größere Flexibilität bei der Durchführung des Verfahrens, da die Parameter der Einzelschritte leichter zu beeinflussen sind, so dass das Verfahren insgesamt besser steuerbar ist.

Vorzugsweise ist die im Wesentlichen lineare Relativbewegung zwischen dem Leitungsende und dem Anschluss weggesteuert. Die weggesteuerte Durchführung der linearen Relativbewegung zwischen Leitungsende und Anschluss gestattet eine präzise Einstellung der gewünschten Position des Leitungsendes bezüglich des Anschlusses bzw. umgekehrt, da im Rahmen der Wegsteuerung fertigungsbedingte Toleranzen, insbesondere im Hinblick auf Längenabmaße oder Wandstärken der Bauteile gut kompensiert werden können.

Die Wegsteuerung der im Wesentlichen linearen Relativbewegung kann in Abhängigkeit von der Wandstärke und/oder vom Durchmesser des Leitungsendes erfolgen. Dadurch wird die Prozessstabilität verbessert, da durch Berücksichtigung der Wandstärke bzw. des Durchmessers des Leitungsendes die damit einhergehende veränderliche Schmelzemenge kontrolliert werden kann. Insbesondere kann die durch die weggesteuerte, im Wesentlichen lineare Relativbewegung bestimmte Wegstrecke mit zunehmender Wandstärke des Leitungsendes verringert werden. Da es sich gezeigt hat, dass mit zunehmender Wandstärke auch die Menge an Schweißgut erhöht wird, kann durch eine entsprechende Verringerung der im Rahmen der linearen Relativbewegung durchfahrene Wegstrecke die Schweißgutmenge auf einer zur sicheren Durchführung des Verfahrens ausreichende und günstige Menge reduziert werden.

Bei dem erfindungsgemäßen Verfahren wird ein Durchmesser des Leitungsendes wenigstens im ersten Schritt verändert, insbesondere vergrößert, wodurch im Leitungsende Druckspannungen erzeugt werden, die einen radial wirkenden Anpressdruck hervorrufen. Durch eine entsprechend starke Durchmesseränderung können die im Leitungsende entstehenden Druckspannungen und der daraus resultierende Anpressdruck, der sich wiederum auf die Schweißgutmenge auswirkt, gezielt gesteuert werden.

Die Änderung des Durchmessers des Leitungsendes kann entlang einer kurvenförmigen Bahn erfolgen, die durch das Profil des Anschlusses bestimmt ist. Der kurvenförmige Verlauf der Durchmesseränderung, hervorgerufen durch das entsprechende Anschlussprofil, vermeidet die Entstehung von Spannungsspitzen im Material des Leitungsendes und somit lokal unerwünschte Schmelzebildung insbesondere im Übergangsbereich vom kleineren Durchmesser zum größeren Durchmesser des Anschlusses.

In bestimmten Fällen hat es sich als günstig erwiesen, wenn im ersten Schritt die im Wesentlichen lineare Relativbewegung mit einer rotativen Relativbewegung zum Anwärmen des Leitungsendes und des Anschlusses überlagert wird. Durch das gezielte Anwärmen des Leitungsendes kann dessen Aufweitverhalten beeinflusst werden, wodurch die Entstehung unerwünschter Spannungsspitzen im Material des Leitungsendes noch besser vermieden werden kann. Außerdem wird durch die Einstellung einer bestimmten Anwärmtemperatur der radiale Anpressdruck gesteuert, woraus sich eine weitere Einflussmöglichkeit auf die Erzeugung der Schmelzemenge ergibt.

Bei der Erfindung wird der Durchmesser des Leitungsendes vor dem Verbinden mit dem Anschluss der Verbindungsvorrichtung vergrößert. Durch Aufweiten des Leitungsendes vor dem Zusammenstecken des Leitungsendes mit dem Anschluss kann die Entstehung von Spannungsspitzen im Material des Leitungsendes vermieden werden. Die Änderung des Durchmessers des Leitungsendes vor dem Verbinden mit dem Anschluss der Verbindungsvorrichtung kann mit den vorstehend genannten Ausführungsformen kombiniert werden. Beispielsweise ist es möglich, den Durchmesser des Leitungsendes zu ändern und daraufhin das mehrstufige Verfahren zum Verbinden der Leitung mit der Verbindungsvorrichtung durchzuführen.

Weiterhin ist es möglich, beim Ändern des Durchmessers des Leitungsendes unterschiedliche Durchmesser in Längsrichtung des Leitungsendes zu bilden. Die in Längsrichtung des Leitungsendes unterschiedlich gebildeten Durchmesser gestatten eine gezielte Beaufschlagung bestimmter Bereiche des Anschlusses mit einem geeigneten und durch den jeweiligen Durchmesser bestimmten Anpressdruck.

In bestimmten Fällen hat es sich als zweckmäßig erwiesen, dass der Durchmesser des Leitungsendes so vergrößert wird, dass der Durchmesser einer Außenfläche des Leitungsendes etwas größer gebildet wird als der Durchmesser einer mit der Außenfläche des Leitungsendes in Kontakt kommenden Innenfläche des Anschlusses. Dadurch wird ein Verschweißen der Außenfläche des Leitungsendes mit einer Innenfläche des Anschlusses ermöglicht.

Eine weitere Möglichkeit zur Steuerung des Entstehungsbereiches der beim Reibschweißen entstehenden Schmelze kann nach einer weiteren Ausführungsform der Erfindung dadurch erreicht werden, dass Kontaktflächen des Leitungsendes und/oder des Anschlusses mit einem Gleitmittel zumindest bereichsweise versehen werden. Auf diese Weise wird die Reibung zwischen dem Anschluss und dem Leitungsende lokal in den Bereichen gesenkt, in denen die Bildung von Schmelze vermieden werden soll.

Die Erfindung wird im Folgenden anhand schematischer Zeichnungen beispielsweise und mit weiteren Einzelheiten erläutert.

Dabei zeigen
- Fig. 1: einen Teilschnitt in Längsrichtung einer Verbindungsvorrichtung, auf die ein Leitungsende aufgeschoben wird, und
- Fig. 2: die Verbindungsvorrichtung nach Fig. 1, wobei das Leitungsende in die zum Reibschweißen vorgesehene Position bewegt ist.

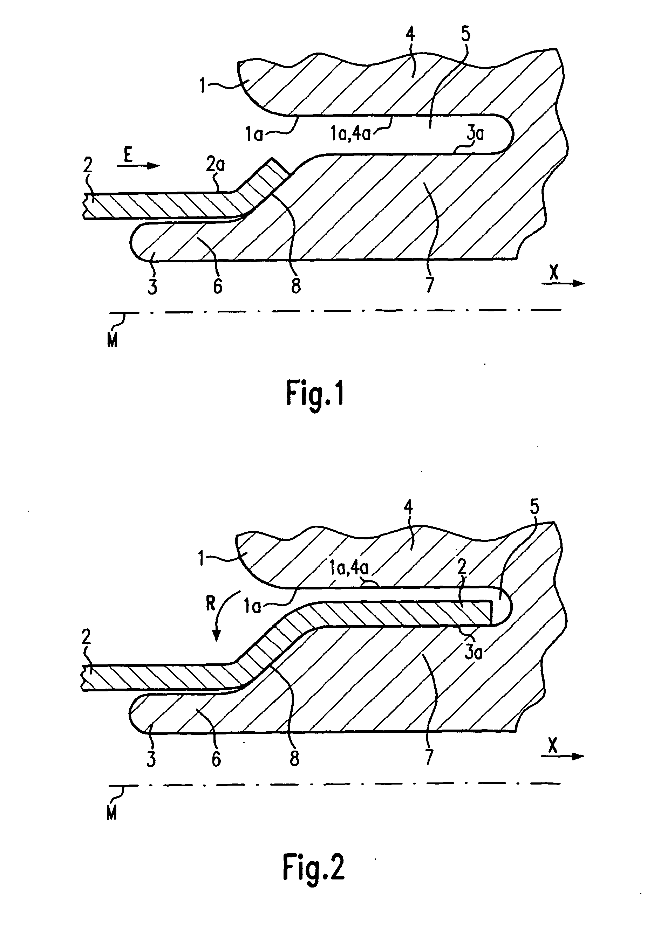

In den Figuren 1 und 2 werden anhand einer Verbindungsvorrichtung in der Form einer Schnellkupplung (Quick-Connector) und einer Leitung die wesentlichen Schritte eines Verfahrens nach einem Ausführungsbeispiel der Erfindung erläutert. Die Verwendung der in den Figuren 1 und 2 gezeigten Verbindungsvorrichtung im Rahmen des Verfahrens ist bevorzugt, da dadurch besonders gute Ergebnissen beim Verbinden der Vorrichtung mit einer Leitung erzielt werden können. Die Durchführung des Verfahrens ist allerdings nicht auf die in den Figuren 1 und 2 gezeigte Verbindungsvorrichtung beschränkt. Vielmehr können im Rahmen des Verfahrens auch Verbindungsvorrichtungen mit anderen Querschnittsgeometrien verwendet werden.

Die in den Figuren 1, 2 dargestellte Verbindungsvorrichtung ist ausschnittsweise gezeigt und zwar im Bereich des Anschlusses 1 der Verbindungsvorrichtung. Die Verbindungsvorrichtung ist rotationssymmetrisch bezüglich der Mittelachse M ausgebildet, wobei der in den Figuren 1, 2 nicht gezeigte, unterhalb der Mittellinie M angeordnete Querschnittsbereich der Verbindungsvorrichtung dem in den Figuren 1, 2 dargestellten Querschnittsbereich entspricht.

Die Verbindungsvorrichtung weist einen weiteren, nicht gezeigten Anschluss auf, der in Längsrichtung X der Verbindungsvorrichtung dem Anschluss 1 koaxial gegenüber angeordnet ist. Der Anschluss 1 weist einen Innenstutzen 3 und einen im Wesentlichen konzentrisch zum Innenstutzen 3 angeordneten Außenstutzen 4 auf. Zwischen dem Innenstutzen 3 und dem Außenstutzen 4 ist ein Ringspalt 5 zur Aufnahme eines Leitungsendes 2 einer zu verbindenden Leitung ausgebildet. Der Innenstutzen 3 ist mit einem Einlaufbereich 6 und mit einem Haltebereich 7 ausgebildet, wobei der Durchmesser des Haltebereichs 7 größer ist als der Durchmesser des Einlaufbereichs 6. Der Einlaufbereich 6 ist dem Haltebereich 7 in der Einschieberichtung E des Leitungsendes 2 vorgeordnet. Der Einlaufbereich 6 dient einer Führung des Leitungsendes 2 beim Aufstecken des Leitungsendes 2 auf den Anschluss 1. Die durch das Reibschweißen erzeugte Schweißstelle ist im Haltebereich 7 angeordnet, der den Bereich darstellt, der für die sichere Verbindung zwischen dem Anschluss 1 und dem Leitungsende verantwortlich ist.

Zwischen dem Einlaufbereich 6 und dem Haltebereich 7 ist ein Übergangsbereich 8 vorgesehen, der den Durchmesserunterschied zwischen dem Einlaufbereich 6 und dem Haltebereich 7 ausgleicht. Wie in den Figuren 1, 2 dargestellt, ist dieser Übergangsbereich 8 kurvenförmig ausgebildet.

Hinsichtlich der weiteren Ausgestaltung der in den Figuren 1, 2 gezeigten Verbindungsvorrichtung wird auf die deutsche Patentanmeldung der Anmelderin mit dem Aktenzeichen 10 2004 027 831.8 verwiesen.

Diese Verbindungsvorrichtung ist insbesondere zur Verbindung von Kraftstoffleitungen in Kraftfahrzeugen vorgesehen, kann aber auch auf anderen technischen Gebieten zum Einsatz kommen, bei denen es auf eine sichere Verbindung von Leitungen zum Transport von flüssigen oder gasförmigen Medien ankommt.

Das Verbinden des Leitungsendes 2 mit dem Anschluss 1 der Verbindungsvorrichtung, d.h. des Quick-Connectors, erfolgt durch Reibschweißen. Dabei wird unter dem Begriff "Verbinden von Leitungen" sowohl das Verbinden einer Einzelleitung mit dem Anschluss des Quick-Connectors verstanden als auch das Verbinden von wenigstens zwei Leitungen mit Hilfe des Quick-Connectors, der auf einer Anschlussseite mit einem Leitungsende durch Reibschweißen fest verbunden und auf der anderen Anschlussseite mit einem weiteren Leitungsende, beispielsweise mittels eines nicht gezeigten Clips, fixiert wird.

Beim Reibschweißen wird der Entstehungsbereich der sich bildenden Schmelze gesteuert. Der Begriff "Steuern" bedeutet sowohl das Steuern des Verfahrens durch einen offenen Signalkreises als auch das Regeln des Verfahrens im Rahmen eines geschlossenen Signalkreises, bei dem die gesteuerte Ausgangsgröße auf die zu steuernde Eingangsgröße zurückwirkt.

Durch das Steuern des Entstehungsbereiches der beim Reibschweißen entstehenden Schmelze wird die lokale Position des Ortes der Schmelzebildung gezielt verändert. Das bedeutet, dass der Ort der Schmelzebildung beispielsweise in Einschiebrichtung E nach hinten in einen hinteren Abschnitt des Haltebereichs 7 verlagert wird.

Ferner kann das Steuern des Entstehungsbereiches der beim Reibschweißen entstehenden Schmelze eine Veränderung der Bereichsgrenzen in dem Sinne bedeuten, dass der Entstehungsbereich der Schmelze flächenmäßig verändert, insbesondere begrenzt wird. Insofern kann durch das Steuern des Entstehungsbereiches der Schmelze ein im Vergleich zu einem nicht gesteuertes Verfahren flächenmäßig kleinerer Bereich eingestellt werden.

Durch die gesteuerte Veränderung der lokalen Position des Entstehungsortes der Schmelze als auch durch die flächenmäßige Begrenzung des Entstehungsbereiches kann vermieden werden, dass Schmelze zwischen der Innenseite des Leitungsendes 2 und der Außenfläche des Innenstutzens ins Leitungsinnere gelangt und dort in der Form von Granulat bzw. Abriebspartikeln zu einer Verschmutzung der Leitung führt. Insbesondere ist es durch Steuern des Entstehungsbereiches möglich, die beim Reibschweißen entstehende Schmelze entweder an eine im Hinblick auf den unerwünschten Schmelzeaustritt unkritische Stelle des Anschlusses 1 zu verlegen oder den Schmelze-Entstehungsbereich flächenmäßig so zu begrenzen, dass nur die zur Bildung einer ausreichend festen Schweißverbindung erforderliche Schweißgutmenge erzeugt wird.

Das Steuern des Entstehungsbereiches der Schmelze kann beispielsweise dadurch erfolgen, dass der Anpressdruck zwischen dem Leitungsende 2 und dem Anschluss 1 im Wesentlichen lokal im Entstehungsbereich der Schmelze erzeugt wird. Durch gezielte Beaufschlagung bestimmter Anschlussbereiche 1 mit dem Anpressdruck wird erreicht, dass hauptsächlich in diesen Bereichen ein Verschweißen stattfindet.

Eine konkrete Möglichkeit, den Entstehungsbereich der beim Reibschweißen entstehenden Schmelze zu steuern, bietet die in den Figuren 1, 2 exemplarisch dargestellte Abfolge der Verbindungsschritte nach einem bevorzugten Ausführungsbeispiel der Erfindung.

In Fig. 1 ist dargestellt, dass in einem ersten Schritt das Leitungsende 2 und der Anschluss 1 durch eine im Wesentlichen lineare Relativbewegung zusammengefügt werden. Die Fügerichtung ist mit dem Pfeil E bezeichnet, wobei die Erfindung nicht auf die dargestellte Einschubbewegung des Leitungsendes 2 begrenzt ist. Vielmehr ist es auch möglich, das Leitungsende 2 ortsfest zu halten und den Anschluss 4 entgegen der in Fig. 1 gezeigten Einschubrichtung E zu bewegen, so dass eine im Wesentlichen lineare Relativbewegung zwischen den beiden Bauteilen stattfindet.

Im Rahmen des in Fig. 1 gezeigten ersten Schrittes werden das Leitungsende 2 und der Anschluss 1 bis zu einer vorgegebenen Position oder bis zum Erreichen eines vorgegebenen Widerstandes relativ zueinander bewegt, wodurch der Entstehungsbereich der im nachfolgenden zweiten Schritt durch Reibschweißen gebildeten Schmelze gesteuert wird.

Generell erfolgt die Steuerung des Entstehungsbereichs der Schmelze durch ein definiertes, gesteuertes Einschieben des Leitungsendes 2 in den Anschluss 1, wobei eine vorgegebene Wegstrecke zurückgelegt wird. Zur Bestimmung dieser vorgegebenen Wegstrecke können verschiedene Steuergrößen verwendet werden. Beispielsweise ist es möglich, den zurückgelegten Weg oder die Position des Leitungsendes bezüglich des Anschlusses bzw. umgekehrt zu messen. Außerdem ist es möglich, die gewünschte Wegstrecke durch Messung des mechanischen Reibwiderstands zwischen dem Leitungsende 2 und dem Anschluss 1 zu bestimmen, da dieser Widerstand mit zunehmender Wegstrecke zunimmt. Es ist ferner möglich, das Verfahren über die Zeit zu steuern.

Nachdem das Leitungsende 2 und der Anschluss 1 durch die lineare Relativbewegung ineinander gesteckt und dadurch mechanisch vorläufig fixiert sind, wird im zweiten Verfahrensschritt, der in Fig. 2 dargestellt, durch eine rotative Relativbewegung zwischen dem Leitungsende 2 und dem Anschluss 1 Reibungswärme zwischen den beiden Bauteilen erzeugt, die dadurch verschweißen.

Um zu vermeiden, dass das Leitungsende bereits im ersten Schritt beim Einschieben in den Anschluss 1 aufschmilzt, wird die lineare Relativbewegung im Rahmen des ersten Verfahrensschrittes so langsam und mit so geringem Druck ausgeführt, dass es nicht zum Aufschmelzen des Leitungsendes 2 kommt. Erst im zweiten Schritt bei der Durchführung der rotativen Relativbewegung zwischen dem Leitungsende 2 und dem Anschluss 1 werden die Geschwindigkeit, d.h. die Drehgeschwindigkeit, und der Druck gezielt so erhöht, dass das Verschweißen des Leitungsendes 2 und des Anschlusses 1 nur während der zweiten Phase des Verfahrens, d.h. während des zweiten Schrittes (Fig. 2) erfolgt. Durch die Trennung der beiden Prozessschritte, Einschieben und Verschweißen, wird zum einen erreicht, dass die Schmelze ausschließlich in dem dafür vorgesehenen Bereich, nämlich im Haltebereich 7, entsteht und nicht bereits im vorderen Einlaufbereich 6. Diese Verfahrensführung trägt dazu bei, dass keine Schmelze zwischen dem Innenstutzen 3 und dem Leitungsende 2 austritt und in das Leitungsende gelangen kann.

Die verschiedenen Möglichkeiten zur Bestimmung der Einschubtiefe, d.h. der Wegstrecke, die durch die lineare Relativbewegung zwischen dem Leitungsende 2 und dem Anschluss 1 bestimmt wird, werden im Folgenden näher erläutert.

Für die Bestimmung der jeweiligen Einschubtiefe, d.h. Wegstrecke, müssen die speziellen Geometrien des jeweils im Rahmen des Verfahrens verwendeten Quick-Connectors bzw. des Leitungsendes 2 berücksichtigt werden. Generell gilt, dass die maximale Einschubtiefe durch die für eine ausreichend feste Schweißverbindung erforderliche Schweißgutmenge begrenzt wird. Wird das Leitungsende zu tief eingeschoben, wird zuviel Schmelze erzeugt, die in das Leitungsinnere austritt und zu den unerwünschten Verschmutzungen führt. In den meisten Anwendungsfällen sollte vermieden werden, dass das Leitungsende bis zum Anschlag, d.h. bis an den Grund des Ringspalts 5, eingeschoben wird, da in diesem Fall die gebildete Schmelzemenge zu groß ist.

Die minimale Einschubtiefe bestimmt wesentlich die Festigkeit der Schweißverbindung, da mit geringerer Einschubtiefe die gebildete Schmelzemenge abnimmt und somit für die Herstellung der Schweißverbindung weniger Schweißgut zur Verfügung steht.

Die minimale und maximale Einschubtiefe sind geometrieabhängig und können durch Versuche für den jeweiligen Quick-Connector bzw. die jeweilige Kombination aus Quick-Connector mit Leitungsende bestimmt werden. Die Einschubtiefe, d.h. die durch die lineare Relativbewegung bestimmte Wegstrecke hängt beispielsweise von der Wandstärke des zu verbindenden Rohres bzw. der zu verbindenden Leitung ab. Bei der Festlegung der minimalen und maximalen Einschubtiefe wird deshalb berücksichtigt, ob die zu verbindende Leitung eine große oder eine geringe Wandstärke aufweist.

Im Fall einer dickwandigen Leitung, beispielsweise mit einer Wandstärke von ca. 1,1 mm, entsteht bereits im vorderen Abschnitt des Haltebereichs 7 ein für das Reibschweißen ausreichend hoher Anpressdruck, so dass ein prozessstabiler Schweißbereich, der eine ausreichende Festigkeit bei gleichzeitiger Vermeidung von Schmelzeaustritt gewährleistet, durch eine geringere Einschubtiefe erreicht wird als bei einer dünnwandigeren Leitung mit beispielsweise einer Wandstärke von 0,9 mm.

Bei einer solchen dünnwandigen Leitung mit einer Wandstärke von ca. 0,9 mm muss eine größere Einschubtiefe gewählt werden, um eine ausreichende Festigkeit der Schweißverbindung zu erzielen. Da bei dünnwandigeren Leitungen weniger Schmelze gebildet wird, vergrößert sich auch die maximale Einschubtiefe, so dass insgesamt ein tieferes Einschieben des Leitungsendes bei dünnwandigeren Rohren in den Anschluss 1 möglich ist, ohne dass es zu einem Schmelzeaustritt in das Leitungsinnere kommt.

Sowohl bei dickwandigen als auch bei dünnwandigen Leitungen muss jeweils der optimale Bereich für die Einschubtiefe in Abhängigkeit der jeweiligen Geometrie des Quick-Connectors (beispielsweise Durchmesser des Haltebereichs 7 oder Steigung des Übergangsbereiches 8) ermittelt werden, der eine prozessstabile Verschweißung der Bauteile im Hinblick auf eine Vermeidung der Verschmutzung des Leitungsinneren und die Festigkeit der Verbindung gewährleistet.

Eine weitere Möglichkeit zur Bestimmung der Einschubtiefe, d.h. der Wegstrecke bietet die Messung des mechanischen Reibwiderstandes zwischen Leitungsende 2 und Anschluss 1. Andere Möglichkeiten der Bestimmung dieser Wegstrecke sind denkbar. Beispielsweise könnte die Einschubzeit bestimmt werden. Die Wegsteuerung hat allerdings den Vorteil, dass fertigungsbedingte Toleranzen, insbesondere der Längenabmaße der Leitung bzw. des Quick-Connectors berücksichtigt werden können, wodurch eine präzise Steuerung des Entstehungsbereiches der Schmelze ermöglicht wird.

Bei der Bestimmung der Einschubtiefe bzw. des prozessstabilen Bereiches der Einschubtiefe können auch Werkstoffkennwerte der jeweils verwendeten Materialien berücksichtigt werden. Beispielsweise kann die Materialdichte, die Temperaturleitfähigkeit, die Wärmeleitfähigkeit, die Wärmeübergangszahl, die spezifische Wärmekapazität, die Wärmeeindringfähigkeit und der Längenausdehnungskoeffizient herangezogen werden.

Eine weitere zusätzliche Möglichkeit, den Schmelze-Entstehungsbereich zu steuern, besteht darin, den Durchmesser des Leitungsendes im ersten Verfahrensschritt, d.h. beim Aufschieben des Leitungsendes 2 auf den Anschluss 4, zu verändern, insbesondere zu vergrößern. Die Änderung des Durchmessers des Leitungsendes 2 erfolgt dabei entlang einer kurvenförmigen Bahn, die durch das Profil des Anschlusses 2 bestimmt ist, wie in den Figuren 1, 2 dargestellt. Durch die Verformung des Leitungsendes entlang einer kurvenförmigen Bahn werden Spannungsspitzen im Material des Leitungsendes und somit lokal unerwünschte Schmelzebildung im Übergangsbereich 8 bzw. in dem vorderen Abschnitt des Haltebereichs 7 vermieden, der an den Übergangsbereich 8 angrenzt.

Insbesondere zusammen mit dem langsamen Einschieben des Leitungsendes 2 in den Anschluss 1 wird durch die Änderung des Durchmessers des Leitungsendes entlang der kurvenförmigen Bahn erreicht, dass gerade bei dickwandigeren Leitungen die Bildung von Schmelze im vorderen Abschnitt des Haltebereichs 7 bzw. im Übergangsbereich 8 verhindert wird, so dass die Schmelze hauptsächlich im hinteren Abschnitt des Haltebereichs 7 entsteht, der im Hinblick auf den unerwünschten Schmelzeaustritt vergleichsweise unkritisch ist.

Die im ersten Schritt erfolgende lineare Relativbewegung kann mit einer rotativen Relativbewegung überlagert werden, wodurch das Leitungsende bzw. der Anschluss angewärmt werden. Auf diese Weise wird erreicht, dass beim Reibschweißen vergleichsweise mehr Schweißgut erzeugt wird, so dass die Festigkeit der Schweißverbindung erhöht werden kann. Außerdem wird durch das Anwärmen das Aufweitverhalten des Leitungsendes 2 und die im Material erzeugbaren Druckspannungen beeinflusst, wodurch eine Steuerung des Anpressdruckes ermöglicht wird.

Erfindungsgemäß wird der Entstehungsbereich der beim Reibschweißen gebildeten Schmelze dadurch gesteuert, dass, der Durchmesser des Leitungsendes 2 vor dem Verbinden mit dem Anschluss 1 der Verbindungsvorrichtung, d.h. vor Durchführung des ersten Schrittes, vergrößert wird. Zum einen lässt sich dadurch der Effekt verstärken, Spannungsspitzen im Material zu vermeiden, wodurch die Entstehung von Schmelze an unerwünschten Stellen, insbesondere in der Nähe des Einlaufbereiches 6, vermieden werden kann.

Außerdem kann durch geeignetes Aufweiten des Leitungsendes 2 durch einen in den Figuren 1, 2 nicht gezeigten Dorn der Durchmesser des Leitungsendes 2 so vergrößert werden, dass der Durchmesser einer Außenfläche 2a des Leitungsendes 2 etwas größer gebildet wird als der Durchmesser einer mit der Außenfläche 2a des Leitungsendes 2 in Kontakt kommenden Innenfläche 1 a des Anschlusses 1. Das bedeutet, dass durch entsprechendes Aufweiten des Leitungsendes 2 die Innenfläche 4a des Außenstutzens 4 durch das aufgeweitete Leitungsende 2 mit einem Anpressdruck beaufschlagt wird, so dass zwischen der Außenfläche 2a des Leitungsendes 2 und der Innenfläche 4a des Außenstutzens 4 durch eine rotative Relativbewegung eine Schweißverbindung hergestellt werden kann.

Im Unterschied zu dem in Fig. 2 gezeigten Ausführungsbeispiel liegt also das Leitungsende 2 nicht am Innenstutzen 3, sondern am Außenstutzen 4 an. Die beim Reibschweißen gebildete Schmelze entsteht im Fügebereich zwischen der Außenfläche 2a des Leitungsendes 2 und der Innenfläche 4a des Außenstutzens 4. Dadurch wird erreicht, dass eventuell gebildeter Schmelzeüberschuss zwischen dem Leitungsende 2 und dem Außenstutzen 4 ins Freie austritt und nicht in das Leitungsinnere gelangt. Dieses Ausführungsbeispiel des erfindungsgemäßen Verfahrens bietet eine verbesserte Prozesssicherheit.

Weiterhin ist es möglich, dem Leitungsende 2 beim Aufweiten eine bestimmte Form aufzuprägen, wodurch im Material des Leitungsendes 2 unterschiedliche Druckspannungen hervorgerufen werden, die in einem günstigen Anpressverhalten des Leitungsendes 2 resultieren.

Erfindungsgemäß wird das Leitungsende 2 so verformt werden, dass der Durchmesser im Ausgangsbereich des Leitungsendes 2 (hinteres Ende der Leitung in Einschubrichtung E) etwas kleiner ausgebildet wird, als der Durchmesser in einem in Einschubrichtung E vorderen Bereich des Leitungsendes 2. Das Leitungsende 2 weist damit eine leicht konische Form auf, die sich in Einschubrichtung E vergrößert. Durch die konische Form des Leitungsendes 2 wird erreicht, dass der Anpressdruck des Leitungsendes 2 auf den Haltebereich 7 in Einschubrichtung E zunimmt und an der Stelle des kleinsten Durchmessers des konisch geformten Leitungsendes 2, also im hinteren Abschnitt des Haltebereiches 7 seinen maximalen Wert annimmt. Somit wird im hinteren Abschnitt des Haltebereiches 7 die Schmelzebildung beim Reibschweißen gefördert.

Der Verfahrensschritt, das Leitungsende 2 vor dem Einschieben in den Anschluss 4 aufzuweiten, kann mit den vorstehend erläuterten Ausführungsbeispielen kombiniert werden.

Überdies kann der Entstehungsbereich der Schmelze dadurch gesteuert werden, dass die Außenfläche 3a des Innenstutzens 3 oder die Innenfläche 4a des Außenstutzens 4 mit einem Gleitmittel versehen werden. Dieses Ausführungsbeispiel ist besonders geeignet für eine Kombination aus Leitungsende 2 und Anschluss 4, bei der das Leitungsende 2 beidseitig am Innenstutzen 3 und am Außenstutzen 4 anliegt. Durch die Auftragung eines Gleitmittels auf eine der beiden Kontaktflächen des Innenstutzens 3 und des Außenstutzens 4 wird erreicht, dass jeweils eine, vorteilhafterweise die Innenfläche 4a des Außenstutzens 4 durch die Reibkräfte erwärmt wird, so dass es nur an dieser, nicht mit dem Gleitmittel versehenen Fläche zum Verschweißen kommt.

Außerdem ist es möglich, kritische Abschnitte des jeweiligen Kontaktbereichs zwischen dem Leitungsende 2 und dem Anschluss 4, beispielsweise den Übergangsbereich 8 und den an den Übergangsbereich 8 angrenzenden vorderen Abschnitt des Haltebereichs 7 mit dem Gleitmittel zu versehen. Auch auf diese Weise wird verhindert, dass Schmelze in kritischen Bereichen gebildet wird, so dass die Bildung der Schmelze auf hinsichtlich des Schmelzeaustritts unbedenkliche Abschnitte begrenzt wird.

Eine Kombination der vorstehend erläuterten Ausführungsbeispiele ist möglich. Beispielsweise kann vor dem ersten Schritt des mehrstufigen Verfahrens das Leitungsende aufgeweitet werden, wobei der Übergangsbereich 8 und der an den Übergangsbereich 8 angrenzende vordere Abschnitt des Haltebereichs 7 mit dem Gleitmittel versehen sind.

Die Erfindung eignet sich, ohne darauf beschränkt zu sein, insbesondere zum Verbinden von Kraftstoffleitungen, da mit Hilfe der Erfindung die Erzeugung von Schweißperlen, die in das Leitungsinnere gelangen, wirksam vermieden oder zumindest verringert werden kann.

## Patentansprüche

1. Verfahren zum Verbinden von Leitungen mit den Schritten:
Verbinden eines Leitungsendes (2) mit einem Anschluss (1) einer Verbindungsvorrichtung für Leitungen, insbesondere eines Quick-Connectors, durch Reibschweißen,
**dadurch gekennzeichnet, dass**
der Durchmesser des Leitungsendes (2) vor dem Aufschieben auf den Anschluss (1) der Verbindungsvorrichtung so vergrößert wird, dass dieses eine konische Form aufweist und somit der Entstehungsbereich der beim Reibschweißen gebildeten Schmelze gesteuert wird.

2. Verfahren nach Anspruch 1, **dadurch gekennzeichnet, dass** ein Anpressdruck zwischen dem Leitungsende (2) und dem Anschluss (1) im Wesentlichen lokal im Entstehungsbereich der Schmelze erzeugt wird.

3. Verfahren nach Anspruch 1 oder 2, **dadurch gekennzeichnet, dass** das Leitungsende (2) und der Anschluss (1)
- in einem ersten Schritt durch eine im wesentlichen lineare Relativbewegung zusammengefügt werden, wobei das Leitungsende (2) und der Anschluss (1) bis zu einer vorgegebenen Position oder bis zum Erreichen eines vorgegebenen Widerstandes relativ zueinander bewegt werden und
- in einem zweiten Schritt durch eine im wesentlichen rotative Relativbewegung unter Druck verschweißt werden.

4. Verfahren nach Anspruch 3, **dadurch gekennzeichnet, dass** die im Wesentlichen lineare Relativbewegung weggesteuert wird.

5. Verfahren nach Anspruch 4, **dadurch gekennzeichnet, dass** die Wegsteuerung der im Wesentlichen linearen Relativbewegung in Abhängigkeit von der Wandstärke und/oder dem Durchmesser des Leitungsendes (2) erfolgt.

6. Verfahren nach Anspruch 5, **dadurch gekennzeichnet, dass** die Wegstrecke, die durch die weggesteuerte, im Wesentlichen lineare Relativbewegung bestimmt wird, mit zunehmender Wandstärke des Leitungsendes (2) verringert wird.

7. Verfahren nach einem der Ansprüche 3 bis 6, **dadurch gekennzeichnet, dass** im ersten Schritt die im Wesentlichen lineare Relativbewegung mit einer rotativen Relativbewegung zum Anwärmen des Leitungsendes (2) und des Anschlusses (1) überlagert wird.

8. Verfahren nach Anspruch 1, **dadurch gekennzeichnet, dass** beim Vergrößern des Durchmessers des Leitungsendes unterschiedliche Durchmesser in Längsrichtung des Leitungsendes gebildet werden.

9. Verfahren nach Anspruch 8, **dadurch gekennzeichnet, dass** der Durchmesser des Leitungsendes (2) so vergrößert wird, dass der Durchmesser einer Außenfläche (2a) des Leitungsendes (2) etwas größer gebildet wird als der Durchmesser einer mit der Außenfläche (2a) des Leitungsendes (2) in Kontakt kommenden Innenfläche (1a) des Anschlusses (1).

10. Verfahren nach wenigstens einem der Ansprüche 1 bis 9, **dadurch gekennzeichnet, dass** Kontaktflächen des Leitungsendes (2) und/oder des Anschlusses (1) mit einem Gleitmittel zumindest bereichsweise versehen werden.

## Claims

1. Method for connecting pipes with the steps:
Connecting a pipe end (2) with a coupling (1) of a connection device for pipes, in particular a quick connector, through friction welding,
**characterised in that**
the diameter of the pipe end (2), before joining with the coupling (1) of the connection device, is enlarged such that said pipe end has a conical shape and thus the region of formation of the molten mass formed during friction welding is controlled.

2. Method according to Claim 1, **characterised in that** a contact pressure between the pipe end (2) and the coupling (1) is produced essentially locally in the molten mass formation region.

3. Method according to Claim 1 or 2, **characterised in that** the pipe end (2) and the coupling (1)
- are brought together in a first step by an essentially linear relative movement, wherein the pipe end (2) and the coupling (1) are moved together relative to one another up to a predetermined position or until a predetermined resistance is obtained and
- in a second step are welded by an essentially rotational relative movement under pressure.

4. Method according to Claim 3, **characterised in that** the essentially linear relative movement is displacement controlled.

5. Method according to Claim 4, **characterised in that** the displacement control of the essentially linear relative movement occurs in dependence of the wall thickness and / or the diameter of the pipe end (2).

6. Method according to Claim 5, **characterised in that** the distance which is determined by the displacement controlled, essentially linear relative movement is reduced with increasing wall thickness of the pipe end (2).

7. Method according to one of the Claims 3 to 6, **characterised in that** in the first step the essentially linear relative movement is superimposed by a rotational relative movement to heat up the pipe end (2) and the coupling (1).

8. Method according to Claim 1, **characterised in that** by enlarging the diameter of the pipe end (2), different diameters are formed in the longitudinal direction of the pipe end (2).

9. Method according to Claim 8, **characterised in that** the diameter of the pipe end (2) is enlarged such that the diameter of an external surface (2a) of the pipe end (2) is formed slightly larger than the diameter of an internal surface (1a) of the coupling (1) which comes into contact with the external surface (2a) of the pipe end (2).

10. Method according to at least one of the Claims 1 to 9, **characterised in that** the contact surfaces of the pipe end (2) and / or of the coupling (1) are provided with a lubricant, at least in some parts.

## Revendications

1. Procédé pour raccorder des conduites, comprenant les étapes suivantes :
raccordement d'une extrémité de conduite (2) à un raccord (1) d'un dispositif de raccordement pour conduites, en particulier d'un raccord rapide, par soudage par friction,
**caractérisé en ce que** le diamètre de l'extrémité de conduite (2) est agrandi, avant l'enfilage sur le raccord (1) du dispositif de raccordement, de telle sorte que ladite extrémité de conduite (2) présente une forme conique et que la zone de formation de la matière fondue lors du soudage par friction est ainsi commandée.

2. Procédé selon la revendication 1, **caractérisé en ce qu'**une pression de serrage entre l'extrémité de conduite (2) et le raccord (1) est produite globalement localement dans la zone de formation de la matière fondue.

3. Procédé selon la revendication 1 ou 2, **caractérisé en ce que** l'extrémité de conduite (2) et le raccord (1)
- sont assemblés lors d'une première étape grâce à un mouvement relatif globalement linéaire, l'extrémité de conduite (2) et le raccord (1) étant déplacés l'un par rapport à l'autre jusqu'à une position prédéfinie ou jusqu'à ce qu'une résistance prédéfinie soit atteinte, et
- sont soudés sous pression lors d'une seconde étape grâce à un mouvement relatif globalement rotatif.

4. Procédé selon la revendication 3, **caractérisé en ce que** la course du mouvement relatif globalement linéaire est commandée.

5. Procédé selon la revendication 4, **caractérisé en ce que** la commande de la course du mouvement relatif globalement linéaire se fait en fonction de l'épaisseur de paroi et/ou du diamètre de l'extrémité de conduite (2).

6. Procédé selon la revendication 5, **caractérisé en ce que** la course qui est définie par le mouvement relatif globalement linéaire à course commandée diminue avec l'augmentation de l'épaisseur de paroi de l'extrémité de conduite (2).

7. Procédé selon l'une au moins des revendications 3 à 6, **caractérisé en ce que** lors de la première étape, le mouvement relatif globalement linéaire est accompagné d'un mouvement relatif rotatif destiné à chauffer l'extrémité de conduite (2) et le raccord (2).

8. Procédé selon la revendication 1, **caractérisé en ce que** lors de l'augmentation du diamètre de l'extrémité de conduite, différents diamètres sont formés dans le sens longitudinal de l'extrémité de conduite.

9. Procédé selon la revendication 8, **caractérisé en ce que** le diamètre de l'extrémité de conduite (2) est augmenté de telle sorte que le diamètre d'une surface extérieure (2a) de l'extrémité de conduite (2) soit légèrement supérieur au diamètre d'une surface intérieure (1a) du raccord (1) qui vient en contact avec ladite surface extérieure (2a) de l'extrémité de conduite (2).

10. Procédé selon l'une au moins des revendications 1 à 9, **caractérisé en ce que** les surfaces de contact de l'extrémité de conduite (2) et/ou du raccord (1) sont pourvues, au moins par zones, d'un lubrifiant.
